(19) Europäisches Patentamt

European Patent Office

Office européen des brevets

(11) EP 0 703 543 A1

(12) **EUROPEAN PATENT APPLICATION**

(43) Date of publication:
27.03.1996 Bulletin 1996/13

(51) Int. Cl.⁶: **G06K 7/10**

(21) Application number: 94202705.3

(22) Date of filing: 21.09.1994

(84) Designated Contracting States:
AT BE CH DE DK ES FR GB GR IE IT LI LU MC NL PT SE

(71) Applicant: OPTICON SENSORS EUROPE B.V.
NL-2132 NG Hoofddorp (NL)

(72) Inventor: Peng, Ke-Ou
NL-2612 KV Delft (NL)

(74) Representative: de Bruijn, Leendert C. et al
Nederlandsch Octrooibureau
P.O. Box 29720
NL-2502 LS Den Haag (NL)

(54) **Wand scanning apparatus**

(57) An optical scanner with a light source (2), detector means (7) and optical means ($1_p$, 3; 8; 11, 12; 14, 15; 17, 18; 27) arranged in such a way to collect light transmitted by said light source and to focus said collected light with substantially rotationally symmetric shape relative to an optical axis (A) of the scanner in a predetermined working range, and imaging lens means ($1_q$; 10) to collect light reflected by an object disposed within said working range and to focus said reflected light to said optical axis (A) for detecting by said detector means (7), said light source (2) and said optical means ($1_p$, 3; 8; 11, 12; 14, 15; 17, 18; 27) being arranged in such a way that light generated by said light source (2) is not shut off by the detector means (7) before it reaches the working range.

fig - 1

EP 0 703 543 A1

## Description

The present invention relates to an optical scanner comprising a light source, detector means and optical means arranged in such a way to collect light transmitted by said light source and to focus said collected light with substantially rotationally symmetric shape relative to an optical axis of the scanner in a predetermined working range, and imaging lens means to collect light reflected by an object disposed within said working range and to focus said reflected light to said optical axis for detecting by said detector means.

Such a wand scanning apparatus is known from European patent 0.197.673.

Because of low cost, simple and compact structure wand scanners have been widely applied for e.g. bar code reading. Basically, such scanners comprise a light source, a light detector and corresponding optics in a wand-like housing.

In practice, a high reading resolution in a large longitudinal working range is required. It may, for instance, be required that a bar code of high density located on a back side of a transparent cover needs to be read.

Most wand type scanners are pen-like and have a rotation-symmetrical optical axis, called the wand axis. Wand scanners are preferred to be able to read objects at an arbitrary angle relative to their wand axis. Therefore, the spacial resolution and the longitudinal working range are preferred to be rotation independent.

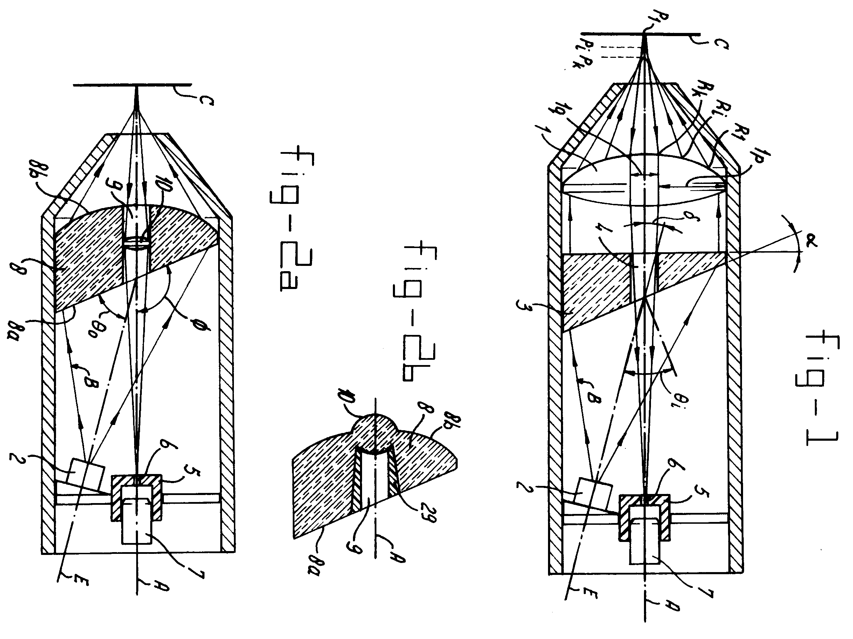

A wand scanner that can read objects at an arbitrary rotation angle with constant resolution is disclosed in European patent 0.197.673 mentioned above. In some embodiments of the scanner according to this European patent (i.e. figures 1 and 2), the light source and the photosensor are both placed off-axis. A specially shaped lens is used to both collect light transmitted by the light source and to focus it in a predetermined working range for scanning an object. Light reflected by that object passes back through said specially shaped lens and through a further optical element superimposed on a prism to direct the reflected light to the photosensor. However, there are many problems related to these embodiments.

First of all, the light source is transmitting light diverging relative to a first axis. The surface of the specially shaped lens is preferred to be hyperboloidal and has to be aligned with that first axis. The surface of the specially shaped lens facing the object is also preferred to be hyperboloidal and has to be aligned with the optical axis of wand scanner itself. Moreover, the further optical element is disposed in a specially cut notch in the surface facing the light source, which notch is difficult to be produced. The photosensor is disposed behind a small hole transversally shifted from the wand axis. This implies that the further optical element for focusing the reflected light to the photosensor has to be aligned with said hole in a very accurate way. In order words, there are many alignment and manufacturing problems related to the known embodiments.

Secondly, the further optical element for focusing reflected light to the photosensor has relatively small dimensions. The wand axis intersects this further optical element at a predetermined angle. Therefore, light will be refracted off-axis by this further optical element. The specially shaped lens is designed to have overcorrected spherical aberration to have a predetermined working range instead of a sharp defined focal point. However, there is only one point within this working range of which the image through the further optical element exactly corresponds with the hole in front of the photosensor. All other points within the working range are imaged through the further optical element to other points more or less shifted in a transverse direction relative to the wand axis, because of the refractive feature of the further optical element. Therefore, the known embodiments are not indifferent for the location within the working range at which an object is scanned. Actually, the reading of objects is not rotation-symmetrical within the working range. The off-axis refraction of the further optical element introduces additional non-axial aberrations and the spacial resolution is limited.

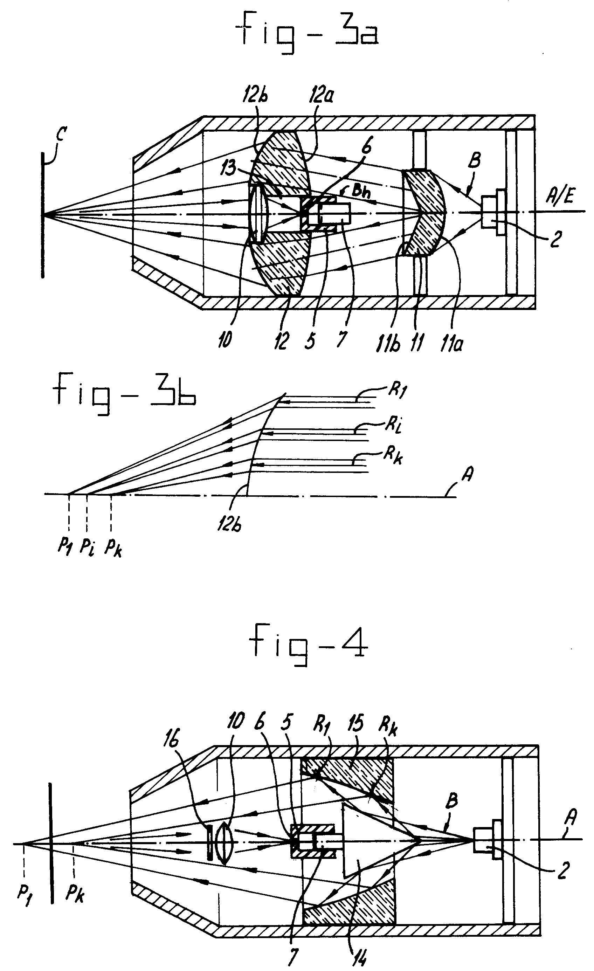

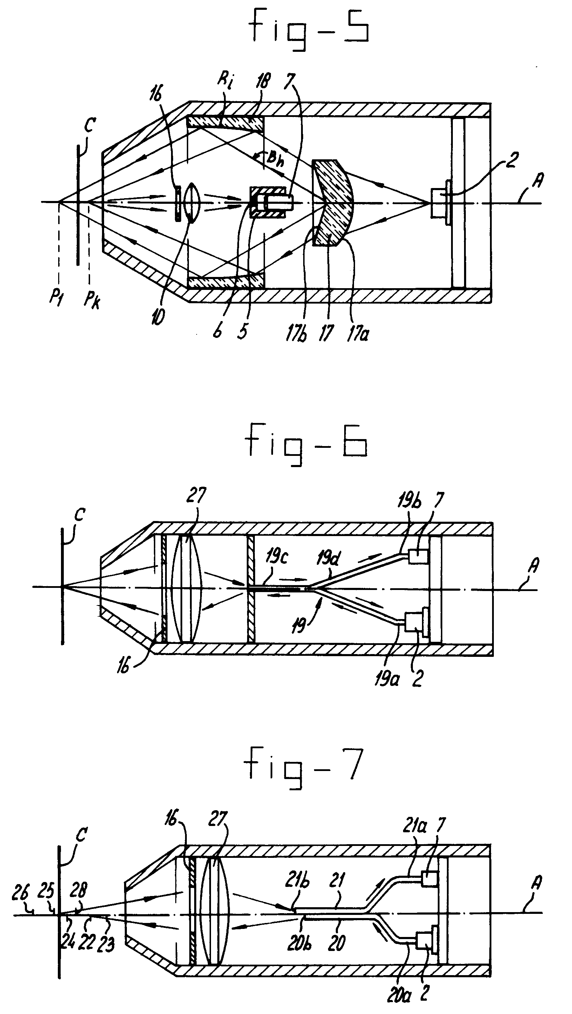

In European patent 0.197.673 two other embodiments (figures 4 and 5) are described in which both the photosensor and the light source are disposed in a tandem-like relationship on the wand axis, thereby avoiding the problems related to an off-axis disposed photosensor as described above. However, these two other embodiments show limited efficiency because the photosensor is disposed in the light beam generated by the light source thereby shutting off part of the generated light from reaching the object to be scanned. The claims are delimited from these two latter embodiments.

It is an object of the present invention to provide a wand scanning apparatus which does not show the disadvantages related to the prior art scanning apparatuses.

Therefore a wand scanning apparatus of the type mentioned above according to the invention is characterized in that said light source and said optical means are arranged in such a way that light generated by said light source is not shut off by the detector means before it reaches the working range.

By both arranging the imaging lens means in such a way that, during operation, the reflected light is focused on and not transversely shifted from the wand axis and arranging the light source and the optical means in the way according to the characterizing part of claim 1 the efficiency is enlarged, whereas at the same time all problems related to an off-axis disposed detector are avoided.

In a first embodiment of the invention said light source is disposed transversely shifted relative to said optical axis, said optical means comprise a prism for collecting light transmitted by said light source and for emitting it to a lens for collecting said light and focusing it in said work range, said prism comprising a hole for passing light focused by said imaging lens means, the latter being an integral part of said lens.

Said optical means may comprise an axicon by which light from the prism is reformed to be a tubular light spot on said axis. The word "axicon" is understood to include all those optical elements that have the property of imaging a point source on their axis of revolution to a range of points along their axis, as further explained in J.H. McLeod, "The axicon: a new type of optical element", Journal of the Optical Society of America, Vol. 44, No. 3, August 1954, pages 592-597.

Preferably, said imaging lens means comprises two hyperbolic surfaces.

In another embodiment of the invention said light source is disposed transversely shifted relative to said optical axis, said optical means comprise one single lens having a first surface tilted with respect to said optical axis for collecting light from said light source, a second surface for focusing said light in said working range and a hole for passing light reflected by said object and that said imaging lens means comprise one single lens. The first surface may be planar and the second surface may be axicon-shaped to produce a tubular light spot on said optical axis.

The optical means may be Fresnel lens means or holographic lens means.

The single lens may be disposed within said hole and, preferably, has two hyperbolic surfaces.

Also, the single lens may be a Fresnel lens or a holographic optical lens.

In still another embodiment the optical means comprise an axicon for collecting light from said light source and for producing a hollow conic light beam and focusing means for collecting light from said axicon and focusing it, the detector means being disposed within said hollow light beam during operation.

The axicon may be a refractive axicon having a hyperbolic surface for receiving light from said light source and a conic surface for transmitting said hollow conic light beam.

However, in another embodiment the axicon is a reflective axicon having a conic reflective surface for receiving and reflecting light from said light source to produce the hollow conic light beam.

In a further embodiment the scanner comprises optic wave guide means, preferably optic fibre means, having a first terminal connected to said light source, a second terminal connected to said detector means and a third terminal for transmitting light to said optical means and a fourth terminal for receiving light focused by said imaging lens means, said third and fourth terminal being substantially disposed on said optical axis.

In the latter embodiment, the third and fourth terminal of said optic fibre means may be one single, coinciding terminal connected to said first terminal and second terminal via an Y-junction.

Alternatively the third and fourth terminal may be of small diameters and may be disposed close to each other in paraxial relationship to said optical axis. Such a third and fourth terminal may be shifted relative to each other along the optical axis.

The invention will now be explained with reference to the accompanying drawings, in which some examples of the present invention are shown and in which:

figure 1 shows a first embodiment of a wand scanner according to the present invention in which the light source is transversely shifted relative to the optical axis;

figure 2a shows a second embodiment of a wand scanner according to the present invention in which the light source is transversely shifted relative to the optical axis;

figure 2b shows an alternative construction for an illuminating lens and an imaging lens in the embodiment according to figure 2a;

figure 3a shows a third embodiment of the present invention in which the light source and the detector means are disposed at the optical axis in a tandem-like configuration;

figure 3b shows a detail of the wand scanner according to figure 3a;

figures 4 and 5 show alternative embodiments of a wand scanner comprising a light source and detector means in a tandem-like configuration at the optical axis;

figures 6 and 7 show further embodiments of wand scanners according to the invention in which optical fibres are used to enhance the flexibility of disposition of the light source and the detector means within the wand scanner.

Figure 1 shows a schematic drawing for a wand scanner, e.g. a bar code reader. In this scanner, a lens 1 having an optical axis coinciding with the central axis A of the wand scanner is used both as illuminating lens and imaging lens. A light source 2, such as a LED, disposed off-axis, generates a diverging light beam B which is deflected by a prism 3 such that after deflection by the prism 3 the axis of symmetry E of light source 2 is coincident with optical axis A. The beam B deflected by prism 3 is focused on an object C to be scanned, e.g. a bar code, by the outer part $1_p$ of lens 1. The prism 3 comprises a hole 4 intersected by optical axis A. Light reflected by the object C is collected by the inner part $1_q$ of lens 1 and imaged through the hole 4 to an opaque screen 5 comprising a small opening 6. The focal point of imaging lens 1, i.e. of part $1_q$, is on the optical axis A. Detector means 7, preferably a photo sensor, is disposed behind opening 6, substantially at the optical axis A.

When the prism 3 has a refraction index n and an apex angle $\alpha$, the deflecting angle $\delta$ between the beam incident upon the prism 3 and the beam emitted by prism 3 is given by:

$$\delta = \theta_i + \sin^{-1}[\sin\alpha\sqrt{n^2 - \sin^2\theta_i} - \sin\theta_i\cos\alpha] - \alpha$$

where $\theta_i$ is the angle of the normal to the incident surface of the prism 3 with respect to the axis of symmetry E.

The imaging light beam focused on the small opening 6 passes through the hole 4 of prism 3 and is, therefore, not deflected by prism 3. The hole 4 may act as diaphragm for the imaging optics.

The deflecting angle $\delta$ of prism 3 depends on the transverse shift of the light source 2 relative to the optical axis A. The optical efficiency of the illumination optics is decreased because of hole 4. Moreover, only inner part $1_q$ of the lens 1 is used as imaging lens for the reflected light beam. Therefore, the focusing angle of the illumination beam is larger than that for the imaging beam.

The longitudinal working range mainly depends on the effective aperture of the imaging optics, i.e. in practice the hole 4 of the prism 3. The small hole 4 increases the depth of field and decreases geometrical aberration.

The spatial resolution mainly depends on the size of the opening 6 in the opaque screen 5.

Outer part $1_p$ of lens 1, which is used to focus said illumination beam, may be designed to generate overcorrected spherical aberration within a predetermined working range, called the longitudinal working range. The surface of outer part $1_p$ of lens 1 could be spherical or aspherical. In order to obtain the best spatial resolution, the surfaces of inner part $1_q$ by which the object C is imaged are, preferably, hyperbolic.

Outer part $1_p$ may, alternatively, be axicon-shaped. Then, outer part $1_p$ may, for instance, have a special shape such that elemental rings at its surface at different distances $R_i$ (i = 1, ..., k) from the optical axis A have different curvatures. To each of these elemental surface rings $R_i$ corresponds a different focal point $p_1$, ... $p_i$, ... $p_k$. Instead of a single focal point, a short line-segment of light ("tubular light spot") $p_1$ - $p_k$ is formed along the optical axis A, in which line-segment object C needs to be placed for proper scanning. Such an axicon $1_p$ may be a Fresnel axicon.

When an operator sweeps the wand scanner over the object C to be scanned, e.g. a bar code, its image will move over the opaque screen 5 and the light beam modulated by the object C, will be detected and converted into an electronic signal by the detector means 7 behind the small opening 6. This electronic signal is then decoded by suitable decoding means (not shown).

Figure 2a shows a second embodiment of a wand scanner according to the invention. In this wand scanner, the lens 1 and prism 3 are combined and designed as one optical component 8. The optical component 8 comprises a planar surface 8a facing the light source 2. Planar surface 8a is tilted with respect to the optical axis A. Again, axis of symmetry E will be refracted to be coincident with the optical axis A. In order to focus the deflected beam the optical component 8 has an other curved rotationally symmetrical optical surface 8b. The optical axis of optical surface 8b is coincident with the optical axis A. The optical component 8 comprises a hole 9 around the optical axis A through which the imaging light beam passes to the detector means 7.

The light source 2, e.g. a LED, disposed off-axis, generates a diverging light beam B which is deflected by the planar surface 8a to form a light beam within the optical component 8 parallel to the optical axis A. The curved surface 8b focuses this parallel light beam, possibly with overcorrected spherical aberration or cone-shaped configuration to produce a line segment, in a working range at the optical axis A. Through the hole 9 of the optical component 8, the illuminated object C is imaged by a lens 10 to the opaque screen 5. The lens 10 is preferably disposed within the hole 9. Through the small opening 6 of the opaque screen 5, the imaging light beam is detected by the detector means 7.

In the embodiment according to figure 2a the angle $\phi$ between the surface 8a and optical axis A is related to the angle $\theta_o$ between axis E and the surface 8a by:

$$\tan\phi = \frac{\sin\theta_o}{n - \cos\theta_o}$$

Again the detector means 7 are disposed substantially at the optical axis A, whereas the light source 2 is shifted off-axis. The longitudinal working range for the wand scanner according to figure 2a mainly depends on the size of the hole 9 which acts as diaphragm for the imaging optics.

To obtain the best possible reading resolution the two surfaces of the lens 10 are most preferred to be hyperbolic. Alternatively, lens 10 may be a Fresnel lens or a holographic deflector lens.

Also lens 1 and prism 3 or the optical component 8 may be substituted by a Fresnel lens or holographic deflector lens.

Surface 8a needs not be planar. It may be aspherical, if desired. Surface 8b may be axicon-shaped, e.g. a Fresnel axicon, to produce a tubular light spot on the optical axis A.

Lenses 8 and 10 can be parts of one integral optic element, as shown in figure 2b. Then, lens 10 is fixed to lens 8, e.g. at the surface 8b, and hole 9 extends behind lens 10. Within hole 9, preferably, an opaque ring 29 acting as diaphragm is used to control the depth of field.

The optical efficiency of the wand scanners in the embodiments according to figure 1 and figure 2a is small because of the holes 4 or 9. In order to increase the efficiency, the present invention also provides for tandem-like configurations, as shown in figures 3a, 4 and 5.

In all embodiments of figures 3a, 4 and 5 a special optical component, i.e. a diverging axicon, is used to deflect light generated by the light source 2 from its axis of symmetry to form a hollow light cone, which allows the imaging optics and the detector means 7 to be disposed at the optical axis A without disturbing the illumination light beam generated by the light source 2.

In the wand scanner according to figure 3a, a refractive axicon 11 is used. The axis of symmetry E of the beam B from the light source 2 is coincident with the optical axis A. The beam B is refracted by the refractive axicon 11 acting as a diverging component in order to form a hollow conic beam $B_h$. The hollow conic beam $B_h$ will be collected by a lens 12 and focused by the lens 12, preferably with a tubular light spot, in a predetermined working range on the optical axis A. The lens 12 comprises a hole 13 for passing light reflected by the object C to be scanned. Because the beam $B_h$ has a hollow conic shape it is possible to dispose the imaging lens 10 and the detector means 7 at the optical axis A such that neither the imaging lens 10 nor the detector means 7 shut off any part of the illumination light beam. Again, in front of the detector means 7 an opaque screen 5 having a small opening 6 is disposed, substantially on the optical axis A.

The longitudinal working range of the wand scanner according to figure 3a mainly depends on the effective aperture of the imaging optics, e.g. the hole 13 of the lens 12. An additional diaphragm may be used to change the effective aperture if desired.

The axicon 11 comprises a first surface 11a facing the light source 2, which is preferred to be hyperbolic. The axicon 11 also comprises a second surface 11b facing the lens 12, which is preferred to be conic. Seen in a direction parallel to optical axis A, the thickness of the axicon 11 increases with increasing distance to optical axis A. With a hyperbolic first surface 11a the diverging light beam B incident upon surface 11a is collimated and by surface 11b, then, the beam B is refracted to form a hollow light cone $B_h$. Light beam $B_h$ has a collimated conic shape.

In order to produce a tubular light spot on optical axis A for uniform illumination in the working range, a converging axicon 12 may be used. Then, its surface 12a facing the light source 2 will be conic in order to deflect conic beam $B_h$ to a beam parallel to axis A. Then, surface 12b opposite surface 12a has a special shape such that elemental rings at this surface at different distances from the optical axis A have different curvatures. As shown in figure 3b surface 12b comprises a plurality of such elemental surface rings $R_i$ (i = 1, 2, ..., k). To each of these elemental surface rings $R_i$ corresponds a different focal point $p_1$, ... $p_i$ ... $p_k$. The surface 12b is the envelope of these elemental surface rings $R_i$ and, instead of one single focal point, a short line-segment of light ("tubular light spot") $p_1$-$p_k$ is formed along the optical axis A. Therefore, in the longitudinal working range of the wand scanner the illumination will be more uniform.

In the embodiment according to figure 3a the central area of the axicon 11 is thinner than the peripheral area of the axicon 11. Therefore, the beam B through axicon 11 will be refracted to the direction in which the thickness of the axicon increases, i.e. off-axis. When a converging axicon 12 is used, the central area of axicon 12 is thicker than its peripheral area. Such an axicon 12 may be a Fresnel axicon.

In figure 4 a wand scanner is shown in which two reflective axicons 14 and 15 are used. Their optical axes are coincident with the optical axis A. The beam B from the light source 2 is reflected by the first reflective axicon 14 which is provided with a conic reflective surface. By means of the second reflective axicon 15 the beam B is focused to the optical axis A. Again, it is preferred not to have one single focal point, but a short tube-like light spot $p_1$-$p_k$ on the optical axis A in order to have a more uniform longitudinal working range. This may be accomplished by providing the surface of reflective axicon 15 with different elemental surface rings $R_i$ (i = 1, ..., k) as explained above with reference to figure 3b.

The surface of reflective axicon 15 is preferred to be ellipsoidal since, then, the well-known property of ellipses that light emitted from one of the focal points of the ellipsis will be reflected and focused to the other focal point of the ellipsis, may be used.

Preferably the reflective surface of the first axicon 14 is conic. By using such a conic axicon 14 the light beam B between the first axicon 14 and the second reflective axicon 15 may be seen as being emitted from the first focal point of the ellipsoidal surface of the reflective axicon 15. In order to produce a tubular light spot $p_1$-$p_k$ several elemental ellipsoidal reflective surfaces $R_i$ on the surface of the second reflective axicon 15 are used, whereas, then, light beam B between the first reflective axicon 14 and the second reflective axicon 15 must be a bundle of light rays originating from their respective focal points as seen from all the elemental ellipsoidal reflective surfaces $R_i$. All these different light rays will then be reflected to their respective focal points $p_i$ (i = 1, ..., k).

The reference numbers 5, 6, 7, and 10 refer to the same elements as in the previous figures and will not be explained again. Reference number 16 refers to a diaphragm in front of the imaging lens 10, which diaphragm 16 is preferred to be used.

Again, light beam B is reshaped by optics 14, 15 in such a way that a hollow light beam is made in the interior of which the imaging optics 10, 16 and the detector means 7 are disposed without shutting off any part of the illuminating beam.

Figure 5 shows a further embodiment of a tandem-like configuration. Again, like in the apparatus according to figure 3a, the beam B generated by the light source 2 is deflected by a refractive axicon 17, having refractive surfaces 17a and 17b to form a hollow conic beam $B_h$. The hollow conic beam $B_h$ is directed to a further reflective axicon 18 to form a scanning spot on the optical axis A.

Refractive axicon 17 comprises a first surface 17a facing the light source 2. This first surface 17a is preferred to be hyperbolic. The second surface 17b opposite the first surface 17a is preferred to be conic in order to form a collimated, hollow conically shaped beam $B_h$.

The surface of the further refractive axicon 18 may be shaped in such a way as to form one single focal point on the optical axis A. However, a tube-like light spot $p_1$-$p_k$ is preferred. A tube-like light spot $p_1$-$p_k$ will be produced, for instance by providing the surface of the further axicon 18 with suitable elemental surface rings $R_i$, as explained above.

By using optical fibres it is possible to dispose the light source and the detector means at any suitable location within the wand scanner, while still focusing the imaging beam on the optical axis A. This will be explained with reference to figures 6 and 7.

In the wand scanner, shown in figure 6, an Y-junction 19d of an optical fibre 19 having terminals 19a, 19b, and 19c, is used. The light source 2 is connected to terminal 19a, while the detector means 7 are connected to the terminal 19b. Terminal 19c corresponds to the focal point of lens 27 which is used both as an illuminating lens and as an imaging lens. A diaphragm 16 is situated between the lens 27 and an object C to be scanned.

The light generated by the light source 2, e.g. a LED, propagates through the optical fibre 19 from the terminal 19a to the terminal 19c. From terminal 19c a diverging illumination beam is directed to the lens 10 and refracted by said lens to the object C to be scanned. The illuminated object C is imaged by the same lens 27 on the terminal 19c, from which the reflected light beam, containing a signal corresponding to the scanned object C, is led to both terminals 19a and 19b through the Y-junction 19. That part of the imaging light beam led to the terminal 19b will be detected by the detector means 7.

The longitudinal working range depends mainly on the aperture of the optical system which is related to the diaphragm 16. The spatial resolution depends both on the imaging optics and on the diameter of the fibre terminal 19c.

Instead of optical fibres having an Y-junction an optical wave guide deposited on a glass substrate having an Y-junction can also be used.

Since part of the imaging light is led back to the light source 2 the optical efficiency of the wand scanner according to figure 6 is not optimal. In order to increase this efficiency the single optical fibre 19 of the wand scanner according to figure 6 may be replaced by two optical fibres 20 and 21 as shown in figure 7. Optical fibre 20 comprises one terminal 20a connected to the light source 2 and one terminal 20b acting as light emitting terminal. Optical fibre 21 comprises one terminal 21a connected to the detector means 7 and an other terminal 21b for receiving light reflected back by the object C to be scanned and focused by the imaging optics 27. The terminals 20b and 21b are bound together and disposed as close as possible to the optical axis A. Both terminals 20b and 21b are at or close to the focal point of imaging lens 27.

The light beam generated by the light source 2 is led by the optical fibre 20 from the terminal 20a to the terminal 20b. A diverging light beam is emitted from the terminal 20b and focused by the illuminating lens 27 to the object C to be scanned. The illuminated object is imaged by the same lens 27 to the terminal 20b from which the light, containing a signal modulated by the object, is led to the detector means 27 via de terminal 20a.

When the two optical fibres 20, 21 are of very small diameter at their terminals 20b, 21b and the distance between them is as small as possible, the illumination and the imaging optics may be seen as paraxial and symmetrical around the optical axis A.

To increase the longitudinal working range the terminals 20b and 21b may be shifted relative to each other along the optical axis A. The terminal 20b is imaged by the lens 27 to a point 22 with a depth of field between points 23 to 24, while the terminal 21b is imaged by the lens 27 to a point 25 with a depth of field between the points 26 and 28. A maximum longitudinal working range from point 23 to point 26 can be achieved when points 23 and 28 are coincident.

It is important to note that in the embodiments according to figures 6 and 7 the illuminating optics and the imaging optics are identical resulting in a same depth of field for the illuminating optics and the imaging optics. Since the optical fibres may be given any shape the light source 2 and the detector means 7 can be disposed at any convenient place within the wand scanner which may, therefore, be very compact.

## Claims

1. An optical scanner comprising a light source (2), detector means (7) and optical means ($1_p$, 3; 8; 11, 12; 14, 15; 17, 18; 27) arranged in such a way to collect light transmitted by said light source and to focus said collected light with substantially rotationally symmetric shape relative to an optical axis (A) of the scanner in a predetermined working range, and imaging lens means ($1_q$; 10) to collect light reflected by an object disposed within said working range and to focus said reflected light to said optical axis (A) for detecting by said detector means (7), characterized in that said light source (2) and said optical means ($1_p$, 3; 8; 11, 12; 14, 15; 17, 18; 27) are arranged in such a way that light generated by said light source (2) is not shut off by the detector means (7) before it reaches the working range.

2. An optical scanner according to claim 1, characterized in that said light source (2) is disposed transversely shifted relative to said optical axis (A), said optical means comprise a prism (3) for collecting light transmitted by said light source (2) and for emitting it to a lens (1) for collecting said light and focusing it in said work range, said prism (3) comprising a hole (4) for passing light focused by said imaging lens means ($1_q$), the latter being an integral part of said lens (1).

3. An optical scanner according to claim 2, characterized in that said optical means comprises an axicon by which light from said prism (3) is reformed to be a tubular light spot on said axis (A).

4. An optical scanner according to claim 2, characterized in that said imaging lens means ($1_q$) comprises two hyperbolic surfaces.

5. An optical scanner according to claim 1, characterized in that said light source (2) is disposed transversely shifted relative to said optical axis (A), said optical means comprise one single lens (8) having a first surface (8a) tilted with respect to said optical axis (A) for collecting light from said light source (2), a second surface (8b) for focusing said light in said working range and a hole (9) for passing light reflected by said object and that said imaging lens means comprises one single lens (10).

6. An optical scanner according to claim 5, characterized in that said first surface (8a) is planar and said second surface (8b) is axicon-shaped to produce a tubular light spot on said optical axis (A).

7. An optical scanner according to claim 2 or 5, characterized in that said optical means (1, 3; 8) are Fresnel lens means or holographic lens means.

8. An optical scanner according to claim 5, characterized in that said single lens (10) is disposed within said hole (9).

9. An optical scanner according to claim 5 or 8, characterized in that said single lens (10) has two hyperbolic surfaces.

10. An optical scanner according to claim 5 or 8, characterized in that said single lens (10) is a Fresnel lens or a holographic optical lens.

11. An optical scanner according to claim 1, characterized in that said optical means comprise an axicon (11, 14, 17) for collecting light from said light source (2) and for producing a hollow conic light beam ($B_h$) and focusing means (12, 15, 18) for collecting light from said axicon (11, 14, 17) and focusing it, the detector means (7) being disposed within said hollow light beam ($B_h$) during operation.

12. An optical scanner according to claim 11, characterized in that said axicon is a refractive axicon (11; 17) having a hyperbolic surface (11a; 17a) for receiving light from said light source (2) and a conic surface (11b; 17b) for transmitting said hollow conic light beam ($B_h$).

13. An optical scanner according to claim 11 or 12, characterized in that said focusing means comprises a lens (12) comprising a hole (13) for passing light reflected by said object.

14. An optical scanner according to claim 11 or 12, characterized in that said focusing means comprises a ring-shaped refractive axicon.

15. An optical scanner according to claim 11 or 12, characterized in that said focusing means comprises a reflective axicon (18).

16. An optical scanner according to claim 11, characterized in that said axicon is a reflective axicon (14) having a conic reflective surface for receiving and reflecting light from said light source (2) to produce said hollow conic light beam ($B_h$).

17. An optical scanner according to claim 16, characterized in that said focusing means comprise a further reflective axicon (15).

18. An optical scanner according to claim 1, characterized in that said scanner comprises optic wave guide means (19; 20, 21) having a first terminal (19a; 20a) connected to said light source (2), a second terminal (19b; 21a) connected to said detector means (7) and a third terminal (19c; 20b) for transmitting light to said optical means (27) and a fourth terminal (19c; 21b) for receiving light focused by said imaging lens means (27), said third and fourth terminal being substantially disposed on said optical axis (A).

**19.** An optical scanner according to claim 18, characterized in that said optic wave guide means comprises optic fibre means (19; 20, 21).

**20.** An optical scanner according to claim 19, characterized in that said third and said fourth terminal of said optic fibre means are one single, coinciding terminal (19c) connected to said first terminal (19a) and second terminal (19b) via an Y-junction (19d).

**21.** An optical scanner according to claim 19, characterized in that said third and said fourth terminal are of small diameters and are disposed close to each other in paraxial relationship to said optical axis (A).

**22.** An optical scanner according to claim 21, characterized in that said third and said fourth terminal are shifted relative to each other along the optical axis (A).

**23.** An optical scanner according to claim 1, characterized in that the optical means (1, 3; 8; 11, 12; 14, 15; 17, 18) are arranged to focus light with overcorrected spherical aberration.

fig-1

fig-2b

fig-2a

## fig-3a

## fig-3b

## fig-4

# Fig-5

# Fig-6

# Fig-7

European Patent Office

**EUROPEAN SEARCH REPORT**

Application Number

EP 94 20 2705

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>Y | GB-A-2 181 584 (ALPS ELECTRIC CO LTD.)<br>* abstract; figure 1B *<br>--- | 1,18-20<br>21,22 | G06K7/10 |
| Y | WO-A-86 05280 (TELEFONAKTIEBOLAGET L M ERICSSON)<br>* claim 1; figure 3 *<br>--- | 21,22 | |
| X<br>A | EP-A-0 170 445 (NISSHIN KOHKI CO., LTD.)<br>* the whole document *<br>--- | 1<br>2,4,5 | |
| D,X<br>A | EP-A-0 197 673 (POLAROID CORPORATION)<br>* column 5, line 11 - line 21; figures 2,4 *<br>--- | 1,23<br>2 | |
| A | US-A-5 043 569 (MITSUNORI IIMA ET AL.)<br>* column 4, line 20 - column 5, line 16; figure 4 *<br>--- | 2,5,7 | |
| A | EP-A-0 527 267 (SYMBOL TECHNOLOGIES, INC.)<br>* column 14, line 55 - column 15, line 32; figure 11 *<br>----- | 1,3 | |
| | | | **TECHNICAL FIELDS SEARCHED** (Int.Cl.6)<br><br>G06K |

The present search report has been drawn up for all claims

| Place of search | Date of completion of the search | Examiner |
|---|---|---|
| THE HAGUE | 8 February 1995 | Chiarizia, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)